# FASCICULE DE BREVET EUROPEEN

(11) **EP 0 376 788 B1**
(45) Date de publication et mention de la délivrance du brevet: **07.07.1993**
(21) Numéro de dépôt: 89403494.1
(22) Date de dépôt: 15.12.1989
(51) Int. Cl.: B60T 8/48

(54) **Circuit hydraulique de freinage pour véhicule automobile, muni d'un dispositif d'antiblocage et d'un dispositif d'antipatinage de roues**
Hydraulischer Bremskreis für Kraftfahrzeuge mit Antiblockier- und Antischlupfeinrichtung
Hydraulic brake circuit for motor vehicles with antilock and antislip device

(30) Priorité: 28.12.1988 FR 8817299
(43) Date de publication de la demande: 04.07.1990
(73) Titulaire: ALLIEDSIGNAL EUROPE SERVICES TECHNIQUES, 93700 Drancy (FR)
(72) Inventeur: De La Broise, Marc, F-93700 Drancy (FR)

(56) Documents cités:
- DE-C- 3 137 286
- FR-A- 2 611 630
- GB-A- 2 119 883

## Description

La présente invention est relative à un circuit hydraulique de freinage pour véhicule automobile et, plus particulièrement, à un tel circuit muni d'un dispositif d'antiblocage et d'un dispositif d'antipatinage des roues du véhicule.

Le blocage des roues est un phénomène qui intervient en période de freinage, quand l'effort de freinage appliqué à une roue provoque un glissement de la roue sur la route. On parle de "patinage" quand, en l'absence de tout freinage, une roue motrice glisse sur la route du fait que le couple moteur qui l'entraîne dépasse le couple de réaction dû au frottement à l'interface roue/route. Dans les deux cas, la direction du véhicule devient difficile, voire impossible, à maîtriser du fait de la perte d'adhérence des roues.

Pour prévenir cette situation périlleuse, on a conçu des dispositifs qui détectent l'imminence de l'apparition d'un blocage d'une roue et qui corrigent en retour la pression du liquide de freinage dans le frein de la roue par des cycles successifs de détente et de remontée en pression, jusqu'à la disparition du risque de glissement de la roue.

On a aussi conçu des dispositifs qui détectent l'imminence d'un patinage pour freiner en retour la roue de manière à diminuer le couple moteur résultant reçu par la roue et empêcher ainsi le glissement de celle-ci sur la route, comme dans DE-A-3 137 286, qui s'applique à un circuit de freinage en "I".

Dans le document EP-A-0 347 274 déposé le 31 mai 1989 par la demanderesse et intitulé "Circuit hydraulique de freinage pour véhicule automobile équipé de dispositifs d'antiblocage et d'antipatinage de roues", appartenant à l'Etat de la Technique visé au paragraphe 3 de l'article 54 de la Convention sur le Brevet Européen, on décrit un circuit de freinage qui comprend un maître-cylindre commandé par une pédale de frein, au moins un frein associé à une roue du véhicule, une électrovalve de détente par laquelle le maître-cylindre communique normalement avec le frein, un actionnement de cette électrovalve commandé par le dispositif d'antiblocage faisant communiquer le frein avec des moyens de stockage de liquide de freinage, et une pompe dont un actionnement commandé par le dispositif d'antiblocage refoule le liquide de freinage des moyens de stockage dans le frein, à travers l'électrovalve de détente, lorsque cette dernière n'est pas actionnée. Le circuit comprend en outre une électrovalve d'antipatinage placée en amont de l'électrovalve de détente et par laquelle le maître-cylindre communique normalement avec le frein, un actionnement de l'électrovalve d'antipatinage commandé par le dispositif d'antipatinage faisant communiquer le maître-cylindre avec un orifice d'aspiration de la pompe, dont l'actionnement est également commandé par le dispositif d'antipatinage.

Lorsque le dispositif d'antipatinage des roues détecte l'imminence d'un glissement de roue, l'électrovalve d'antipatinage est excitée et la pompe est actionnée. Le maître-cylindre communique alors avec les freins du véhicule à travers la pompe. Etant donné que la pédale de frein n'est par hypothèse pas actionnée, le liquide de freinage contenu dans le réservoir du maître-cylindre est alors aspiré par la pompe et refoulé dans les freins, de sorte qu'une action de freinage des roues est automatiquement exercée jusqu'à disparition du risque de glissement de celles-ci.

Dans l'application décrite à un circuit de freinage en "X", à deux circuits indépendants commandant chacun un frein de roue avant et un frein de roue arrière respectivement, il apparaît que l'électrovanne d'antipatinage du circuit décrit ci-dessus est placée en amont des lignes d'alimentation des deux freins. En phase d'antipatinage aucune action sur les deux freins n'est alors possible à partir de la pédale de frein.

Le conducteur peut cependant avoir à agir sur celle-ci alors que l'électrovalve d'antipatinage a été déclenchée accidentellement, ou même alors que celle-ci est normalement actionnée pour prévenir un patinage imminent. Une action sur la pédale de frein peut se justifier de toute façon pour des raisons de sécurité, pour freiner une roue non motrice alors que la roue motrice est, par hypothèse, freinée par le dispositif d'antipatinage.

Avec le circuit de la demande de brevet précitée, dans ces deux circonstances, l'action de freinage sur la roue non motrice sera considérablement retardée du fait d'une absorbtion du liquide de freinage par les moyens de stockage de ce liquide qui sont mis en communication avec le maître-cylindre en période d'antipatinage.

La présente invention a donc pour but de réaliser un circuit hydraulique de freinage pour véhicule automobile, muni d'un dispositif d'antiblocage et d'un dispositif d'antipatinage de roues, qui ne présente pas cet inconvénient.

La présente invention a aussi pour but de réaliser un tel circuit qui, appliqué au freinage d'une roue motrice et d'une roue non motrice en position croisée, autorise en permanence le freinage de la roue non motrice à partir de la pédale de frein, que l'électrovalve d'antipatinage soit actionnée ou non.

On atteint ces buts de l'invention, ainsi que d'autres qui apparaîtront dans la suite de la présente description, avec un circuit hydraulique de freinage pour véhicule automobile, muni d'un dispositif d'antiblocage et d'un dispositif d'antipatinage de roues, ce circuit comprenant un maître-cylindre commandé par une pédale de frein, des première et deuxième branches connectées au maître-cylindre pour l'alimentation en liquide de freinage de premier et deuxième freins associés respectivement à une roue motrice et à une roue libre, chaque branche comprenant une électrovalve de détente par laquelle le maître-cylindre communique normalement avec le frein associé, un actionnement de cette électrovalve commandé par le dispositif d'antiblocage faisant communiquer le frein avec des moyens de stockage du liquide de freinage et une pompe actionnée sélectivement par le dispositif d'antiblocage pour refouler du liquide de freinage dans les freins, ce circuit, qui comprend en outre une électrovalve d'antipatinage, étant caractérisé en ce que celle-ci est placée en aval du point de jonction des deux branches du circuit au maître-cylindre, dans la branche d'alimentation du frein de roue motrice et en amont de l'électrovalve de détente, pour établir au repos une communication entre le maître-cylindre et le frein de roue motrice à travers cette électrovalve de détente, le dispositif d'antipatinage, à la détection de l'imminence d'un patinage de la roue motrice, actionnant la pompe et l'électrovalve d'antipatinage pour couper cette communication et connecter l'entrée de la pompe au maître-cylindre de manière que celle-ci refoule du liquide de freinage venu de ce dernier dans le frein de roue motrice, à travers l'électrovalve de détente associée, de manière à freiner la roue motrice jusqu'à la disparition du risque de glissement de la roue.

Un clapet anti-retour est placé entre l'entrée de la pompe et les moyens de stockage pour empêcher le remplissage de ces moyens par du liquide de freinage venu du maître-cylindre en cas de freinage commandé par la pédale de frein simultanément au fonctionnement du dispositif d'antipatinage ou à un déclenchement accidentel de l'électrovalve d'antipatinage.

Il apparaîtra dans la suite de la présente description que la position choisie pour l'électrovanne d'antipatinage dans le circuit suivant l'invention permet d'exercer en permanence une action de freinage sur la roue non motrice, que l'électrovanne d'antipatinage soit actionnée ou non, ce qui améliore la sécurité du véhicule équipé de ce circuit.

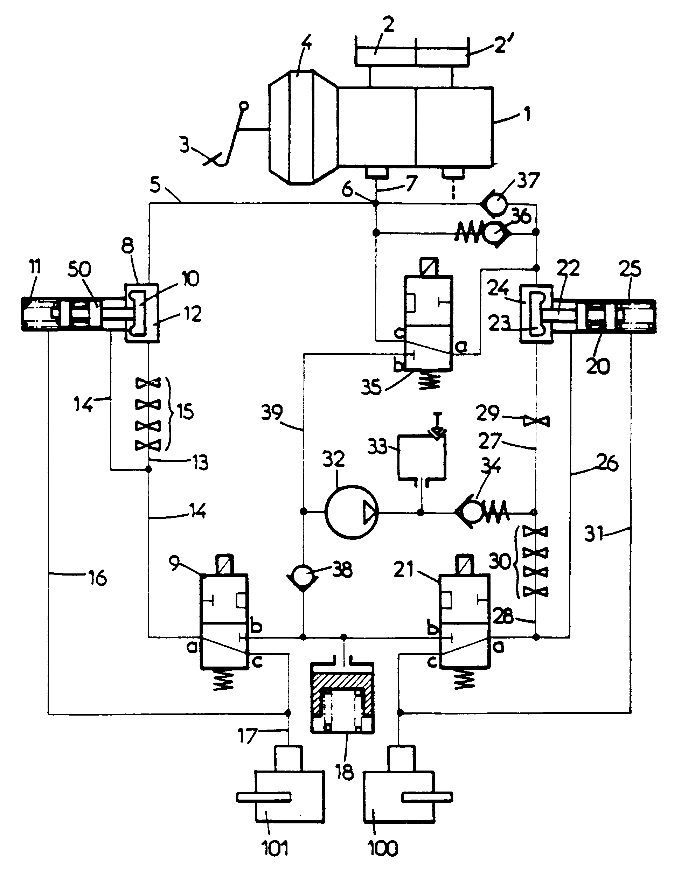

Au dessin annexé donné seulement à titre d'exemple, la figure unique est un schéma d'un mode de réalisation préféré du circuit hydraulique de freinage suivant la présente invention, appliqué à un véhicule à traction avant.

Sur cette figure il apparaît que le circuit suivant l'invention est raccordé classiquement à un maître-cylindre "tandem" 1 alimenté par des réservoirs de liquide de freinage 2, 2′ et commandé par une pédale de frein 3 par l'intermédiaire, éventuellement, d'un servo-frein 4.

Suivant un mode de réalisation préféré de l'invention, le circuit de freinage complet pour un véhicule à quatre roues comprend deux circuits identiques raccordés chacun à une des deux chambres de commande du cylindre tandem 1. On n'a représenté au dessin qu'un seul de ces deux circuits, adapté à la commande d'un frein de roue 100 associé à une roue avant droite motrice et d'un frein de roue 101 associé à une roue arrière gauche non motrice. Le circuit représenté comprend une première branche destinée à l'alimentation du frein 100 et une deuxième branche pour l'alimentation du frein 101. Cette deuxième branche comprend une ligne 5 qui part d'un point de jonction 6 à une ligne 7 raccordée au maître-cylindre 1, cette ligne 5 servant à l'alimentation directe du frein 101 par le maître-cylindre, à travers une valve pilotée 8 et une électrovalve de détente à trois voies et deux positions 9. Un circuit de freinage à dispositif d'antiblocage de ce type est décrit dans FR-A-2.611.630.

La valve pilotée 8 comprend une soupape 50 dont la tête 10 est chargée dans une position d'ouverture par un ressort 11 agissant sur l'extrémité de la soupape qui est opposée à celle qui porte la tête 10. Le maître-cylindre 1 est connecté à une chambre 12 de la valve 8, qui entoure la tête de soupape 10, par la ligne 5. La tête de soupape 10 est interposée entre deux parties de la chambre 12 qui sont respectivement reliées à des lignes 13 et 14. La ligne 13 comprend une pluralité de restrictions 15 alors que la ligne 14 court-circuite ces restrictions dont on expliquera le rôle dans la suite.

La ligne 14 est raccordée à l'orifice a de l'électrovalve 9. Le ressort 11 qui charge la soupape 50 de la valve pilotée est placé dans une chambre qui est raccordée par une ligne 16 à la ligne 17 d'alimentation du frein 101, ces deux lignes étant connectées à l'orifice c de l'électrovalve 9. L'orifice b de l'électrovalve est connecté à un accumulateur 18 de liquide de freinage à basse pression. Quand l'électrovalve 9 est dans sa position de repos, l'orifice b est obturé alors que les orifices a et c communiquent pour établir une liaison entre les lignes 14 et 17. Quand le bobinage de l'électrovalve est excité par un courant électrique, l'orifice a est isolé et les orifices b et c communiquent en provoquant la détente du liquide contenu dans le frein 101, lors d'une séquence d'antiblocage.

De manière similaire la première branche du circuit alimente le frein 100 à travers une valve pilotée 20 et une électrovanne de détente à trois voies et deux positions 21. La valve pilotée 20 comprend une soupape 22 dont la tête 23 est placée dans une chambre 24, cette soupape étant chargée en position d'ouverture par un ressort 25. En position de fermeture la tête de soupape 23 divise la chambre 24 en deux compartiments qui sont reliés à l'orifice a de l'électrovalve de détente 21 par une ligne 26 et par des lignes 27, 28, respectivement. La ligne 26 court-circuite des restrictions 29, 30 disposées respectivement dans les lignes 27 et 28. La chambre de la valve pilotée 20 dans laquelle se trouve le ressort 25 est connectée à l'entrée du frein 100 et à l'orifice c de l'électrovalve 21 par une ligne 31. L'orifice b de l'électrovalve 21 est raccordé à l'accumulateur 18 comme c'est le cas de l'orifice b de l'électrovalve 9.

Comme dans le circuit de freinage décrit dans FR-A-2.611.630, on trouve encore dans le circuit suivant la présente invention une pompe 32 montée entre l'accumulateur basse pression 18 et un accumulateur haute pression 33, pour refouler du liquide de frein dans les freins lors du fonctionnement du dispositif d'antiblocage des roues, comme on le verra dans la suite. Un clapet anti-retour taré 34 empêche un reflux de liquide de freinage dans l'orifice de sortie de la pompe. L'accumulateur haute pression 33 absorbe des fluctuations de pression lors du fonctionnement du dispositif d'antiblocage.

Le circuit comprend encore une électrovalve d'antipatinage 35 à trois voies et deux positions. Suivant une caractéristique importante de la présente invention, dont on expliquera l'importance dans la suite, cette électrovalve est disposée dans la première branche du circuit en aval du point de jonction 6. Dans la position de repos représentée à la figure, l'électrovalve 35 fait communiquer son orifice c connecté au point de jonction 6 et son orifice a connecté à la chambre 24 de la valve pilotée 20, l'orifice b relié à l'entrée de la pompe étant alors isolé. Lorsque cette électrovalve 35 vient dans sa deuxième position comme suite au passage d'un courant dans son bobinage, les orifices b et c communiquent alors que l'orifice a est isolé. Dans cette deuxième position le maître-cylindre est mis en communication avec la pompe 32, l'orifice b étant relié par une ligne 39 à l'entrée de celle-ci.

Le circuit suivant l'invention comprend encore plusieurs clapets anti-retour outre le clapet 34 déjà mentionné. Un clapet anti-retour 36 taré est placé entre l'orifice c de l'électrovalve 35 et la chambre 24 de la valve 20 pour limiter la différence des pressions d'entrée et de sortie de la pompe 32 quand, l'électrovalve 35 étant excitée, celle-ci refoule du liquide de freinage dans le circuit suivant l'invention. Suivant une caractéristique du circuit selon l'invention, un autre clapet anti-retour 37 est monté entre le point de jonction 6 et la chambre 24 de la valve pilotée 20 pour autoriser une circulation du liquide de freinage de ce point de jonction 6 vers cette chambre. En cas d'excitation accidentelle de l'électrovalve 35, une pression sur la pédale de frein permet ainsi d'envoyer à travers le clapet anti-retour 37 un liquide sous pression dans la première branche du circuit, c'est-à-dire vers le frein 100. On conserve ainsi la possibilité de freiner la roue avant droite même en cas d'excitation accidentelle de l'électrovalve 35, ce qui améliore la sécurité de fonctionnement du circuit.

Suivant une autre caractéristique du circuit suivant l'invention, un clapet anti-retour 38 est disposé entre l'entrée de la pompe 32 et celle de l'accumulateur 18 pour un but que l'on expliquera plus loin.

Le circuit de freinage décrit ci-dessus est bien entendu associé à un dispositif d'antiblocage de roues qui comprend un calculateur commandé par des signaux venus de capteurs de vitesse des roues du véhicule pour commander le battement des électrovalves 9 et 21 lorsque l'imminence d'une condition de blocage de l'une ou l'autre des roues associées à ces électrovalves est détectée par ces capteurs. De même, le circuit est associé à un dispositif d'antipatinage comprenant un calculateur, qui peut être alimenté par des signaux venus des mêmes capteurs de vitesse de roues, pour commander l'excitation de l'électrovalve 35 et le battement des électrovalves 9 et 21 quand l'imminence d'une condition de patinage de la roue avant droite motrice est détectée. Bien entendu un seul et même calculateur pourrait être utilisé dans ces deux dispositifs. Ces capteurs et calculateurs (non représentés), sont classiquement utilisés pour la commande de circuits de freinage du type décrit ci-dessus et ne seront pas décrits avec plus de détail.

En l'absence de toute action des dispositifs d'antiblocage et d'antipatinage, le circuit de freinage décrit ci-dessus fonctionne classiquement, lorsque le conducteur appuie sur la pédale de frein, en faisant remonter la pression du liquide dans le frein 100 à travers la valve 20 ouverte et l'électrovalve 21 au repos, et dans le frein 101 à travers la valve 8 et l'électrovalve 9.

On va maintenant décrire le fonctionnement du circuit suivant la présente invention, dans trois situations spécifiques différentes à savoir : une première situation correspondant au fonctionnement du dispositif d'antiblocage, une deuxième situation correspondant au fonctionnement du dispositif d'antipatinage, et une troisième situation correspondant à une action de freinage développée par le conducteur à l'aide de la pédale de frein alors que l'électrovalve d'antipatinage se trouve excitée accidentellement.

Lorsque, lors d'une période de freinage le dispositif d'antiblocage intervient pour empêcher une perte d'adhérence imminente d'une roue du véhicule, l'électrovalve d'antipatinage 35 reste au repos dans la position représentée à la figure. La période de freinage commence par une action du conducteur sur la pédale de frein 3, action amplifiée par le servo-frein 4 qui fait monter la pression dans la ligne 7 raccordée au maître-cylindre, cette pression étant transmise au frein 100 à travers la valve pilotée 20 et l'électrovalve 21. Quand le dispositif d'antiblocage détecte l'imminence d'un glissement de la roue avant droite, par exemple, il commande l'excitation de l'électrovalve 21 pour couper la communication entre les orifices a et c de cette électrovalve et mettre en communication l'orifice c et l'orifice b de manière à permettre la détente du liquide de frein contenu dans le frein 100 qui se vide dans l'accumulateur 18. Cette détente se répercute dans la ligne 31 et la chambre de la soupape 20 contenant le ressort 25 et provoque la fermeture de cette soupape en isolant la ligne 26. Le liquide récupéré par l'accumulateur est aspiré par la pompe 32, mise en route simultanément par le calculateur du dispositif d'antiblocage, cette pompe refoulant le liquide sous pression vers l'électrovalve 21 dont l'orifice a est alors fermé. Le calculateur commande ensuite une remontée en pression du liquide de frein dans le frein 100 à travers les restrictions 29 et 30 qui ralentissent cette remontée, l'électrovalve 21 étant de nouveau mise brièvement au repos par le calculateur pour rétablir la communication entre les orifices a et c. Une nouvelle détente commandée par le calculateur laisse la valve 20 fermée, du fait qu'elle est du type à confirmation de pression. Des remontées en pression ultérieures, commandées par le calculateur, s'opèrent alors à travers les restrictions 30 qui ralentissent ces remontées comme décrit précédemment. On établit ainsi des cycles de détente suivis de remontée en pression lente, ces cycles s'enchaînant de manière à établir une remontée en pression en dents de scie jusqu'à ce que le risque de glissement de la roue soit écarté.

Le dispositif d'antiblocage fait fonctionner d'une manière similaire la deuxième branche du circuit qui alimente le frein de roue 101, en cas de détection de l'imminence d'un blocage de la roue arrière gauche. Pour commander une détente du liquide contenu dans le frein 101, le dispositif commande alors l'excitation de l'électrovalve 9 pour mettre en communication la ligne 17 et l'accumulateur 18 qui se remplit de liquide, repris par la pompe 32 qui renvoie le liquide sous pression via l'électrovalve 35 vers la valve pilotée 8 et l'électrovalve 9 alors fermée. Une remontée en pression lente peut ensuite être commandée comme décrit précédemment grâce au passage du liquide de freinage dans les restrictions 15 mises en série avec la chambre 12 de la valve pilotée 8. Ce fonctionnement est classique et il n'est pas nécessaire de le décrire plus avant d'autant qu'il ne fait pas partie de l'invention.

On notera la présence de la restriction 29 entre le clapet anti-retour 34 et la chambre 24 de la valve pilotée 20, pour filtrer des réactions qui, lors du fonctionnement du circuit en antiblocage, sont transmises sur la pédale de frein à travers le maître-cylindre et le servo-frein 4. En effet, les cycles successifs de détente suivis de remontée lente en pression qui sont établis dans le frein avant droit lors des périodes de fonctionnement du dispositif d'antiblocage se convertissent en vibrations mécaniques sur la pédale de frein 3, vibrations qui sont désagréables pour le conducteur. La restriction 29 atténue sensiblement l'amplitude de ces vibrations.

Examinons maintenant le fonctionnement du circuit de freinage suivant l'invention, lors de l'intervention du dispositif d'antipatinage. Comme on l'a vu plus haut, un tel dispositif doit être capable de détecter l'imminence d'un patinage d'une roue du véhicule, le couple-moteur appliqué à cette roue étant alors responsable de cette situation, comme c'est le cas par exemple lors du démarrage d'un véhicule sur un sol recouvert de gravillons, si le conducteur accèlère un peu trop brutalement. Le dispositif d'antipatinage reçoit des capteurs de vitesse des roues, des signaux analysés dans son calculateur pour détecter l'imminence d'un patinage de la roue motrice associée au frein 100. Le calculateur commande alors l'excitation de l'électrovalve 35 qui passe alors dans la position où elle met en communication les orifices b et c en obturant l'orifice a. Ainsi la pompe 32, également mise en route par le calculateur peut aspirer du liquide venu du maître-cylindre, à travers l'électrovalve 35, pour renvoyer ce liquide dans le frein 100 à travers la valve pilotée 20 et l'électrovalve 21, pour faire ainsi remonter la pression dans ce frein qui applique un couple résistant à la roue pour contrer le couple-moteur avant que celui-ci ne provoque un patinage de la roue sur la route. Lorsque la remontée de la pression dûe à la pompe devient trop élevée, le clapet anti-retour 36 de décharge s'ouvre, ce clapet étant taré de manière à s'ouvrir par exemple pour une pression de l'ordre de 130 à 150 bars. On évite ainsi d'endommager le circuit et la pompe.

Un avantage essentiel du circuit suivant l'invention tient en ce que le fonctionnement de la deuxième branche du circuit, qui alimente le frein 101 associée à une roue non motrice, n'est pas perturbé par le fonctionnement du dispositif d'antipatinage. En effet, grâce à la disposition de l'électrovalve 35 dans la première branche du circuit et en aval du point de jonction 6 des deux branches au maître-cylindre, le basculement de l'électrovalve d'antipatinage 35 est sans effet sur la branche du circuit qui commande le freinage de la roue arrière gauche non motrice. Le conducteur peut alors ainsi freiner cette roue arrière en appuyant sur la pédale de frein même si le dispositif d'antipatinage est en fonctionnement, ce qui n'est pas possible avec le circuit de freinage décrit dans la demande de brevet français précitée No. 8807996 déposée le 15 juin 1988 par la demanderesse. Cette possibilité de freinage de la roue arrière, en toutes circonstances, accroît la sécurité du véhicule lorsque celui-ci est équipé du circuit de freinage suivant la présente invention.

En outre, l'environnement difficile auquel sont soumis les composants électriques d'un véhicule automobile font que ceux-ci peuvent être sujets à des déclenchements non commandés. Ainsi, l'électrovalve d'antipatinage 35 peut-elle être excitée accidentellement par un défaut d'origine électrique, et non pas par le calculateur du dispositif d'antipatinage, comme le voudrait son fonctionnement normal. En cas d'actionnement accidentel de cette électrovalve, la pompe 32 n'est pas actionnée par le calculateur. Dans une telle situation il est souhaitable que le conducteur du véhicule puisse néanmoins actionner les freins à l'aide de la pédale 3 car, comme on l'a vu plus haut, il est important que le conducteur puisse en toute circonstance agir sur les freins du véhicule. Si donc l'électrovalve 35 est actionnée, c'est-à-dire si l'orifice a est obturé, le conducteur peut toujours accroître la pression dans les freins en appuyant sur la pédale 3, grâce au clapet anti-retour 37 qui s'ouvre alors pour envoyer du liquide de freinage sous pression dans le frein 100, à travers la chambre 24 de la valve pilotée 20 et l'électrovalve 21 au repos. D'autre part, le conducteur peut toujours agir sur le frein 101 de la roue arrière gauche qui reste en liaison permanente avec le maître-cylindre 1 grâce à la ligne 5, à travers la valve pilotée 8 et l'électrovalve 9.

On remarquera le rôle du clapet anti-retour 38 qui, lors d'un actionnement commandé ou accidentel de l'électrovalve de patinage 35, empêche du liquide de freinage venu du maître-cylindre de s'écouler dans l'accumulateur basse pression 18. Ceci est plus particulièrement important lors d'un déclenchement accidentel de l'électrovalve 35 puisqu'une action sur la pédale de frein visant à faire remonter la pression dans les freins de roues s'en trouverait alors diminuée par l'écoulement d'une partie du liquide chassé du maître-cylindre vers l'accumulateur 18. On supprime ainsi les temps de réponse dûs au remplissage de l'accumulateur du circuit de la demande de brevet français précitée No. 8807996, lorsqu'on actionne la pédale de frein alors que l'électrovanne d'antipatinage est accidentellement actionnée.

Il apparaît donc que les dispositions particulières de l'électrovanne d'antipatinage 35 et des clapets anti-retour 37 et 38 du circuit de freinage suivant l' invention apportent plusieurs avantages :
- en séquence d'antipatinage, il y a conservation d'une possibilité de freinage de la roue arrière non motrice avec un temps de réponse normal,
- conservation d'une possibilité de freinage de la roue arrière en toutes circonstances et, notamment en cas de déclenchement accidentel de l'électrovanne d'antipatinage.

Dans ce dernier cas, le freinage de la roue arrière est complété par un freinage de la roue avant grâce à la mise en communication du frein 100 avec le maître-cylindre par le clapet anti-retour 37.

Bien entendu l'invention n'est pas limitée au mode de réalisation décrit et représenté qui n'a été donné qu'à titre d'exemple. En particulier bien que, dans ce mode de réalisation, il apparaît que le véhicule soit à traction avant, on pourrait tout aussi bien adapter le circuit suivant l'invention à un circuit de freinage pour véhicule propulsé par ses roues arrière. En outre, bien que l'on ait fait état dans la description du circuit suivant l'invention, d'un circuit classique en "X", l'invention pourrait être mise en oeuvre dans d'autres types de circuits bien connus, dans la mesure où ceux-ci comprennent au moins un circuit de commande d'un frein associé à une roue motrice et d'un deuxième frein associé à une roue non motrice.

## Revendications

1. Circuit hydraulique de freinage pour véhicule automobile, muni d'un dispositif d'antiblocage et d'un dispositif d'antipatinage de roues, ce circuit comprenant un maître-cylindre (1) commandé par une pédale de frein (3), des première (35, 20, 21) et deuxième (5, 8, 9) branches connectées au maître-cylindre (1) pour l'alimentation en liquide de freinage de premier et deuxième freins (100, 101) associés respectivement à une roue motrice et à une roue libre, chaque branche comprenant une électrovalve de détente (21, 9) par laquelle le maître-cylindre communique normalement avec le frein associé, un actionnement de cette électrovalve commandé par le dispositif d'antiblocage faisant communiquer le frein avec des moyens de stockage (18) du liquide de freinage et une pompe (32) actionnée sélectivement par le dispositif d'antiblocage pour refouler du liquide de freinage dans les freins, ce circuit, qui comprend en outre une électrovalve (35) d'antipatinage établissant au repos une communication entre le maître-cylindre (1) et le frein de roue motrice (100) à travers l'électrovalve de détente associée à la roue motrice (100), étant caractérisé en ce que l'électrovalve (35) d'antipatinage est placée en aval du point de jonction (6) des deux branches du circuit au maître-cylindre, dans la branche d'alimentation du frein de roue motrice (100) et en amont de l'électrovalve de détente (21), le dispositif d'antipatinage, à la détection de l'imminence d'un patinage de la roue motrice, actionnant la pompe (32) et l'électrovalve d'antipatinage (35) pour couper la communication prééxistante et connecter l'entrée de la pompe (32) au maître-cylindre (1) de manière que celle-ci refoule du liquide de freinage venu de ce dernier dans le frein de roue motrice (100), à travers l'électrovalve de détente (21) associée, de manière à freiner la roue motrice jusqu'à la disparition du risque de glissement de la roue.

2. Circuit conforme à la revendication 1, caractérisé en ce qu'il comprend un clapet anti-retour (38) placé entre l'entrée de la pompe (32) et les moyens de stockage (18) pour empêcher le remplissage de ces moyens par du liquide de freinage venu du maître-cylindre en cas de freinage commandé par la pédale de frein simultanément au fonctionnement du dispositif d'antipatinage ou à un déclenchement accidentel de l'électrovalve d'antipatinage (35).

3. Circuit conforme à l'une quelconque des revendications 1 et 2, caractérisé en ce qu'un clapet anti-retour (37) est placé en dérivation sur l'électrovalve d'antipatinage (35) pour empêcher que la pompe (32) ne refoule du liquide de freinage dans le maître-cylindre (1) quand l'électrovalve (35) est actionnée par le dispositif d'antipatinage et pour autoriser une mise en pression du frein de la roue motrice (100) par la pédale de frein, lors d'un actionnement accidentel de cette électrovalve (35).

4. Circuit conforme à l'une quelconque des revendications 1 à 3, caractérisé en ce que les première et deuxième branches du circuit comprennent des valves pilotées (20, 8) respectivement, qui commandent la mise en circuit de restrictions (30, 15) entre ces valves et les électrovalves de détente (21, 9) respectivement, lors des séquences de fonctionnement du dispositif d'antiblocage.

5. Circuit conforme à la revendication 4, caractérisé en ce qu'une restriction (29) est placée entre la sortie de la pompe (32) et la valve pilotée (20) pour filtrer des réactions sur la pédale de frein (3) lors des séquences de fonctionnement du dispositif d'antiblocage.

6. Circuit conforme à l'une quelconque des revendications 4 et 5, caractérisé en ce qu'il comprend un clapet anti-retour taré (36) entre l'entrée de l'électrovalve d'antipatinage (35) qui est connectée au point de jonction (6) et la valve pilotée (20) qui communique avec la sortie de la pompe (32), pour limiter la pression du liquide refoulé par la pompe à une valeur prédéterminée.

7. Circuit conforme à l'une quelconque des revendications précédentes, caractérisé en ce qu'un clapet anti-retour (34) est placé sur la sortie de la pompe pour empêcher un refoulement de liquide de freinage dans la pompe lors d'une mise en pression de la première branche par une action sur la pédale de frein.

8. Circuit conforme à la revendication 7, caractérisé en ce qu'un accumulateur haute pression (33) est placé sur la sortie de la pompe (32) entre celle-ci et le clapet (34).

## Claims

1. Hydraulic brake circuit for a motor vehicle, equipped with an anti-lock device and with an anti-skid device for wheels, this circuit comprising a master cylinder (1) controlled by a brake pedal (3), first (35, 20, 21) and second (5, 8, 9) branches connected to the master cylinder (1) for feeding brake fluid to first and second brakes (100, 101) associated respectively with a driving wheel and with a free wheel, each branch comprising a solenoid relief valve (21, 9), by means of which the master cylinder normally communicates with the associated brake, an actuation of this solenoid valve under the control of the anti-lock device putting the brake in communication with brake-fluid storage means (18), and a pump (32) actuated selectively by means of the anti-lock device in order to deliver brake fluid to the brakes, this circuit, also comprising a solenoid anti-skid valve (35) establishing, at rest, communication between the master cylinder (1) and the driving-wheel brake (100) via the solenoid relief valve associated with the driving wheel (100), being characterized in that the solenoid anti-skid valve (35) is placed downstream of the junction point (6) of the two branches of the circuit with the master cylinder, in the branch feeding the driving-wheel brake (100), and upstream of the solenoid relief valve (21), the anti-skid device, upon the detection of imminent skidding of the driving wheel, actuating the pump (32) and the solenoid anti-skid valve (35), in order to break the preexisting communication and connect the inlet of the pump (32) to the master cylinder (1), in such a way that the pump (32) delivers brake fluid coming from the latter to the driving-wheel brake (100), via the associated solenoid relief valve (21), so as to brake the driving wheel until the risk of slipping of the wheel has disappeared.

2. Circuit according to Claim 1, characterized in that it comprises a non-return valve (38) placed between the inlet of the pump (32) and the storage means (18), in order to prevent these means from being filled with brake fluid coming from the master cylinder, in the event of braking controlled by the brake pedal simultaneously with the functioning of the anti-skid device or with the accidental triggering of the solenoid anti-skid valve (35).

3. Circuit according to either of Claims 1 and 2, characterized in that a non-return valve (37) is placed in parallel with the solenoid anti-skid valve (35), to prevent the pump (32) from delivering brake fluid to the master cylinder (1) when the solenoid valve (35) is actuated by means of the anti-skid device, and to allow the driving-wheel brake (100) to be put under pressure by the brake pedal during accidental actuation of this solenoid valve (35).

4. Circuit according to any of Claims 1 to 3, characterized in that the first and second branches of the circuit comprise respectively pilot-controlled valves (20, 8) which command the putting into circuit of restrictions (30, 15) between these valves and the solenoid relief valves (21, 9) respectively, during the operating sequences of the anti-lock device.

5. Circuit according to Claim 4, characterized in that a restriction (29) is placed between the outlet of the pump (32) and the pilot-controlled valve (20), for the purpose of filtering reactions on the brake pedal (3) during the operating sequences of the anti-lock device.

6. Circuit according to either of Claims 4 and 5, characterized in that it comprises a calibrated non-return valve (36) between the inlet of the solenoid anti-skid valve (35) connected to the junction point (6) and the pilot-controlled valve (20) communicating with the outlet of the pump (32), in order to limit the pressure of the fluid delivered by the pump to a predetermined value.

7. Circuit according to any one of the preceding Claims, characterized in that a non-return valve (34) is placed at the outlet of the pump, to prevent brake fluid from returning to the pump when the first branch is put under pressure as a result of action on the brake pedal.

8. Circuit according to Claim 7, characterized in that a high-pressure accumulator (33) is placed at the outlet of the pump (32) between the latter and the non-return valve (34).

## Patentansprüche

1. Hydraulikbremskreis für ein Kraftfahrzeug, der mit einer Rad-Antiblockiereinrichtung und mit einer Rad-Antischlupfeinrichtung ausgestattet ist, wobei dieser Kreis versehen ist mit einem durch ein Bremspedal (3) gesteuerten Hauptzylinder (1), einem ersten (35, 20, 21) und einem zweiten (5, 8, 9) Zweig, die mit dem Hauptzylinder (1) verbunden sind, um eine erste und eine Zweite Bremse (100, 101), die einem angetriebenen Rad bzw. einem freien Rad zugehören, mit Bremsflüssigkeit zu versorgen, wobei jeder Zweig ein Druckminderungselektroventil (21, 9) aufweist, über das der Hauptzylinder normalerweise mit der zugeordneten Bremse in Verbindung steht, wobei eine von der Antiblockiereinrichtung gesteuerte Betätigung dieses Elektroventils die Bremse verbindet mit Speichermitteln (18) für die Bremsflüssigkeit und mit einer Pumpe (32), die von der Antiblockiereinrichtung wahlweise betätigt wird, um Bremsflüssigkeit in die Bremsen zu fördern, wobei dieser Kreis, der außerdem ein Antischlupfelektroventil umfaßt, das in der Ruhestellung über das dem angetriebenen Rad (100) zugeordnete Druckminderungselektroventil eine Verbindung zwischen dem Hauptzylinder (1) und der Bremse (100) des angetriebenen Rades herstellt, dadurch gekennzeichnet ist, daß das Antischlupfelektroventil (35) stromabseitig zum Verbindungspunkt (6) der zwei Zweige des Kreises mit dem Hauptzylinder im Versorgungszweig der Bremse (100) des angetriebenen Rades und stromaufseitig zu dem Druckminderungselektroventil (21) angeordnet ist, wobei die Antischlupfeinrichtung bei Erfassung eines unmittelbar bevorstehenden Schlupfes des angetriebenen Rades die Pumpe (32) und das Antischlupfelektroventil (35) betätigt, um die vorher vorhandene Verbindung zu unterbrechen und den Eingang der Pumpe (32) mit dem Hauptzylinder (1) zu verbinden, derart, daß diese vom letzteren kommende Bremsflüssigkeit über das zugeordnete Druckmindervngselektroventil (21) in die Bremse (100) des angetriebenen Rades fördert, derart, daß das angetriebene Rad gebremst wird, bis die Gefahr eines Rutschens des Rades verschwunden ist.

2. Kreis gemaß Anspruch 1, dadurch gekennzeichnet, daß er ein Rückschlagventil (38) umfaßt, das zwischen dem Eingang der Pumpe (32) und den Speichermitteln (18) angeordnet ist, um im Falle einer durch das Bremspedal gesteuerten Bremsung gleichzeitig zum Betrieb der Antischlupfeinrichtung oder zu einem zufälligen Auslösen des Antischlupfelektroventils (35) zu verhindern, daß diese Mittel mit Bremsflüssigkeit vom Hauptzylinder gefüllt werden.

3. Kreis gemäß einem der Ansprüche 1 und 2, dadurch gekennzeichnet, daß parallel zum Antischlupfelektroventil (35) ein Rückschlagventil (37) angeordnet ist, um zu verhindern, daß die Pumpe (32) Bremsflüssigkeit in den Hauptzylinder (1) fördert, wenn das Elektroventil (35) durch die Antischlupfeinrichtung betätigt wird, und um eine Druckbeaufschlagung der Bremse (100) des angetriebenen Rades durch das Bremspedal zuzulassen, wenn dieses Elektroventil (35) zufällig betätigt wird.

4. Kreis gemäß einem der Ansprüche 1 bis 3, dadurch gekennzeichnet, daß der erste und der zweite Zweig des Kreises Vorsteuerventile (20, 8) enthalten, die die Zuschaltung von Begrenzungseinrichtungen (30, 15) zwischen diesen Ventilen und den entsprechenden Druckminderungselektroventilen (21, 9) bei Betriebsabfolgen der Antiblockiereinrichtung steuern.

5. Kreis gemäß Anspruch 4, dadurch gekennzeichnet, daß zwischen dem Ausgang der Pumpe (32) und dem Vorsteuerventil (20) eine Begrenzungseinrichtung (29) angeordnet ist, um bei Funktionsabfolgen der Antiblockiereinrichtung Reaktionen auf das Bremspedal (3) zu filtern.

6. Kreis gemäß einem der Ansprüche 4 und 5, dadurch gekennzeichnet, daß er zwischen dem mit dem Verbindungspunkt 6 verbundenen Eingang des Antischlupfelektroventils (35) und dem Vorsteuerventil (20), welches mit dem Ausgang der Pumpe (32) in Verbindung steht, ein tariertes Rückschlagventil (36) aufweist, um den Druck der von der Pumpe geförderten Flüssigkeit auf einen vorgegebenen Wert zu begrenzen.

7. Kreis gemäß einem der vorangehenden Ansprüche, dadurch gekennzeichnet, daß am Ausgang der Pumpe ein Rückschlagventil (34) angeordnet ist, um eine Förderung von Bremsflüssigkeit in die Pumpe zu verhindern, wenn der erste Zweig durch eine Einwirkung auf das Bremspedal mit Druck beaufschlagt wird.

8. Kreis gemaß Anspruch 7, dadurch gekennzeichnet, daß am Ausgang der Pumpe (32) zwischen derselben und dem Ventil (34) ein Hochdruck-Akkumulator (33) angeordnet ist.
